# EUROPÄISCHE PATENTSCHRIFT

(11) **EP 3 930 291 B1**
(45) Veröffentlichungstag und Bekanntmachung des Hinweises auf die Patenterteilung: **24.04.2024**
(21) Anmeldenummer: 21172638.5
(22) Anmeldetag: 07.05.2021
(51) Int. Cl.: H04L 69/04, H04L 67/12, H04W 4/38, H04L 67/56, H04L 67/5651

(54) **DATENVERARBEITUNGSGERÄT ZUM EMPFANGEN VON MESSDATEN**
DATA PROCESSING APPARATUS FOR RECEIVING MEASUREMENT DATA
APPAREIL DE TRAITEMENT DES DONNÉES PERMETTANT DE RECEVOIR DES DONNÉES DE MESURE

(30) Priorität: 22.06.2020 DE 102020116358
(43) Veröffentlichungstag der Anmeldung: 29.12.2021
(73) Patentinhaber: E.ON Grid Solutions GmbH, 20537 Hamburg (DE)
(72) Erfinder: Kaden, Sebastian, 22453 Hamburg (DE); Reimann, Marc, 20357 Hamburg (DE); Rühmann, Nadine, 22081 Hamburg (DE); Schröder, Thomas, 22339 Hamburg (DE)
(74) Vertreter: Gunzelmann, Rainer

(56) Entgegenhaltungen:
- EP-A1- 3 627 434
- CN-A- 109 586 976
- Anonymous: "LoRaWAN Network Server - Integrated or Cloud-hosted?", , 22. Oktober 2019 (2019-10-22), Seiten 1-6, XP055825114, Gefunden im Internet: URL:https://www.rs-online.com/designspark/ lorawan-network-server-integrated-or-cloud -hosted-1 [gefunden am 2021-07-16]

## Beschreibung

### TECHNISCHES GEBIET

Die vorliegende Offenbarung betrifft allgemein das technische Gebiet des Empfangens oder Auslesens von Messdaten. Insbesondere betrifft die vorliegende Offenbarung ein Datenverarbeitungsgerät mit einem Niedrigenergie, LoRa-Kommunikationsmodul und einem LoRa-Netzwerkserver und/oder LoRa-Anwendungsserver, sowie ein Datenverarbeitungssystem mit dem Datenverarbeitungsgerät und einer Sensoreinheit und/oder einem Smart Meter Gateway, SMGw.

### HINTERGRUND

Insbesondere im Hinblick auf den Klimawandel sind viele Haushalte daran interessiert, einen Überblick über den eigenen Energie- und Wasserverbrauch zu erhalten. Der Einsatz sogenannter Smart Meter Gateways, SMGw, erlaubt ein periodisches Auslesen von Verbrauchszählern eines Haushalts. Insbesondere aufgrund der gesetzlich vorgeschriebenen Sicherheitsvorgaben können jedoch nicht beliebige Sensoreinheiten über SMGws ausgelesen werden. So verfügen SMGws üblicherweise lediglich über einen Anschluss für ein lokales metrologisches Netz, LMN, einen Anschluss für ein Weitverkehrsnetz (Wide Area Network, WAN), und einen Anschluss für ein Heimnetzwerk (Home Area Network, HAN), welcher eine Schnittstelle für regelbare Erzeuger (Controllable Local System, CLS) umfasst.

Es besteht die Möglichkeit, Sensoreinheiten eines Haushalts auch ohne den Einsatz eines SMGws an das Internet anzubinden, um, beispielsweise über Cloud-Dienste, einen Überblick über die Messdaten der Sensoreinheiten zu ermöglichen. Ein Netzwerk derartiger Sensoreinheiten wird üblicherweise als Internet der Dinge (Internet of Things, IoT) bezeichnet, da diese einen Datenaustausch mit anderen Geräten und Systemen über das Internet ermöglichen.

Es existieren verschiedene Technologien, mit denen Sensoreinheiten an das Internet gekoppelt werden können. Beispielsweise können in den Sensoreinheiten kabelgebundene Kommunikationsmodule vorgesehen sein, die über Kabelleitungen mit einem externen Modem verbunden sind, welches wiederum eine Verbindung mit dem Internet ermöglicht. In einigen Bereichen, beispielsweise bei schwer zugänglichen Produkten, sind drahtlose Kommunikationsmodule vorteilhaft.

Eine Möglichkeit, wie Sensoreinheiten drahtlos an ein Kommunikationsnetzwerk angebunden werden können, beruht auf der sogenannten Niedrigenergie, LoRa-Technologie. Hierbei sendet eine Sensoreinheit Messdaten mittels eines LoRa-Kommunikationsmoduls drahtlos an eine entsprechend eingerichtete und positionierte Empfangsstation, welche die empfangenen Messdaten wiederum drahtlos an einen LoRa-Netzwerkserver sendet. Der LoRa-Netzwerkserver verarbeitet die empfangenen Daten und sendet die verarbeiteten Daten an einen LoRa-Anwendungsserver. Der Lora-Anwendungsserver kann einem Benutzer dann eine Übersicht über die empfangenen, verarbeiteten Messdaten bereitstellen.

Hierbei werden üblicherweise von der Empfangsstation alle der empfangenen Messdaten an den LoRa-Netzwerkserver gesendet, sodass eine hohe Datenübertragungsrate benötigt wird. Außerdem können im Fall eines Verbindungsproblems zwischen der Empfangsstation und dem LoRa-Netzwerkserver, oder zwischen dem LoRa-Netzwerkserver und dem LoRa-Anwendungsserver, die Messdaten nicht mehr von dem jeweiligen LoRa-Server empfangen werden.

Die Druckschrift CN 109 586 976 A betrifft ein Datenverarbeitungsgerät mit einem LoRa-Netzwerkserver und einem LoRa-Anwendungsserver.

Die Internet-Publikation Anonymous: "LoRaWAN Network Server - Integrated or Cloud-hosted?", 22. Oktober 2019 (2019-10-22), Seiten 1-6, XP055825114, betrifft ein Datenverarbeitungsgerät mit einem LoRaWAN Netzwerkserver oder einem LoRa-Anwendungsserver.

### KURZER ABRISS

Der vorliegenden Offenbarung liegt die Aufgabe zugrunde, ein effizientes und zuverlässiges Verarbeiten von drahtlos empfangenen Messdaten zu ermöglichen.

Diese Aufgabe wird durch das Datenverarbeitungsgerät des Anspruchs 1 gelöst.

Weitere Aspekte der vorliegenden Erfindung sind in den abhängigen Ansprüchen definiert.

Gemäß einem ersten Aspekt wird ein Datenverarbeitungsgerät bereitgestellt, umfassend: ein Niedrigenergie-, LoRa-, Kommunikationsmodul (2), das dazu eingerichtet ist, Messdaten mindestens einer Sensoreinheit (300) zu empfangen; ein erstes Kommunikationsmodul (4), das dazu eingerichtet ist, Messdaten an ein Kommunikationsnetzwerk zu senden; einen LoRa-Netzwerkserver (8), der dazu eingerichtet ist, aus den empfangenen Messdaten ausgewählte Messdaten durch Auswahl von Messdaten mindestens einer identifizierten Sensoreinheit zu bestimmen; und einen LoRa-Anwendungsserver (10), der dazu eingerichtet ist, die ausgewählten Messdaten zu empfangen, mindestens einen für eine Messgröße repräsentativen Messwert aus den ausgewählten Messdaten zu ermitteln und ausschließlich den mindestens einen Messwert ohne weitere Messwerte über das erste Kommunikationsmodul (4) an das Kommunikationsnetzwerk zu senden.

Durch die Verwendung des LoRa-Kommunikationsmoduls kann ein Energieverbrauch der einzelnen Sensoreinheiten und des Datenverarbeitungsgeräts minimiert werden, während eine drahtlose Messdatenübertragung ermöglicht wird. Beispielsweise ist das Datenverarbeitungsgerät dazu eingerichtet, zumindest oder ausschließlich die über das LoRa-Kommunikationsmodul empfangenen Messdaten an den LoRa-Netzwerkserver und/oder an den LoRa-Anwendungsserver zu senden. Selbst bei Verbindungsproblemen zwischen dem Datenverarbeitungsgerät und einem Kommunikationsnetzwerk kann eine korrekte Funktionsweise des LoRa-Anwendungsservers sichergestellt werden, da dieser unmittelbar auf die empfangenen Messdaten zugreifen kann. Außerdem können durch den LoRa-Netzwerkserver irrelevante Messdaten herausgefiltert werden, beispielsweise Messdaten nicht identifizierter Sensoreinheiten. Im Fall einer Übermittlung lediglich von Messdaten identifizierter Sensoreinheiten an das Kommunikationsnetzwerk, beispielsweise an einen separaten LoRa-Anwendungsserver, wird somit eine geringere Datenübertragungsrate benötigt, als wenn alle empfangenen Messdaten gesendet werden. Wenn das Datenverarbeitungsgerät sowohl den LoRa-Netzwerkserver als auch den LoRa-Anwendungsserver umfasst, kann das Datenverarbeitungsgerät die Funktionen eines LoRa-Gateways, des LoRa-Netzwerkservers und des LoRa-Anwendungsservers bereitstellen. Hierdurch kann ein Aufbau eines kompletten privaten LoRa-Netzes ermöglicht werden, was eine Verarbeitung der Messdaten sicherstellt, selbst bei einem kompletten Verbindungsverlust zu dem Kommunikationsnetzwerk.

Das LoRa-Kommunikationsmodul kann dazu eingerichtet sein, Messdaten der mindestens einen Sensoreinheit zu empfangen, die nach dem Niedrigenergieweitverkehrsnetzwerkprotokoll, LoRaWAN, gesendet werden. Das LoRa-Kommunikationsmodul kann zur Kommunikation mit der mindestens einen Sensoreinheit nach dem LoRaWAN-Standard eingerichtet sein. Die Spezifikationen des LoRaWAN-Protokolls werden von der LoRa Alliance festgesetzt. Datenübertragung mittels LoRa wird beispielsweise in dem Dokument US 7,791,415 B2 beschrieben. Diese Art der Datenübertragung ermöglicht einen energiesparenden Betrieb der mindestens einen Sensoreinheit und des Datenverarbeitungsgeräts.

Die mindestens eine Sensoreinheit kann einen Verbrauchs- und/oder Einspeisungszähler, beispielsweise einen Stromverbrauchszähler, einen Stromeinspeisungszähler, einen Wärmeverbrauchszähler, einen Wärmeeinspeisungszähler, einen Wasserverbrauchszähler oder einen Gasverbrauchszähler umfassen. Die mindestens eine Sensoreinheit kann einen Türöffnungssensor, einen Fensteröffnungssensor, einen Raumklimasensor oder einen Thermostatsensor umfassen. Die Messdaten zeigen beispielsweise einen Ressourcenverbrauch und/oder eine Ressourceneinspeisung an, wobei die Ressourcen insbesondere Strom, Gas, Wasser und/oder Wärme umfassen.

Das Datenverarbeitungsgerät kann ferner ein erstes Kommunikationsmodul umfassen, das dazu eingerichtet ist, die empfangenen Messdaten, aus den empfangenen Messdaten ausgewählte Messdaten und/oder mindestens einen aus den empfangenen Messdaten ermittelten, für eine Messgröße repräsentativen Messwert an ein Kommunikationsnetzwerk zu senden.

Die Messgröße ist beispielsweise eine einen Ressourcenverbrauch und/oder eine Ressourceneinspeisung anzeigende Messgröße. Die Messgröße kann den Ressourcenverbrauch und/oder die Ressourceneinspeisung direkt anzeigen oder repräsentieren. In diesem Fall kann die Messgröße zum Beispiel ein Stromverbrauch, eine Stromeinspeisung, ein Wasserverbrauch, ein Wärmemengenverbrauch oder ein Gasverbrauch sein. Die Messgröße kann den Ressourcenverbrauch und/oder die Ressourceneinspeisung indirekt anzeigen oder repräsentieren. In diesem Fall ist die Messgröße beispielsweise eine Außentemperatur, eine Innentemperatur, eine Sonnenintensität oder ein Zustand eines den Ressourcenverbrauch bzw. die Ressourceneinspeisung beeinflussenden Systems, wie ein Öffnungszustand einer Tür oder eines Fensters. Hierdurch kann eine Übersicht über eine(n) zurückliegende(n), eine(n) aktuelle(n) und/oder eine(n) voraussichtliche(n) Ressourcenverbrauch und/oder Ressourceneinspeisung bereitgestellt werden.

Das erste Kommunikationsmodul ist bevorzugt ein drahtloses Kommunikationsmodul. Das erste Kommunikationsmodul kann dazu eingerichtet sein, eine drahtlose Kommunikationsverbindung mit dem Kommunikationsnetzwerk bereitzustellen. Das erste Kommunikationsmodul kann ein Mobilfunk-Kommunikationsmodul sein. Beispielsweise ist oder umfasst das erste Kommunikationsmodul ein 2G-, 3G-, 4G- und/oder 5G-Modul. Insbesondere kann das erste Kommunikationsmodul ein Long Term Evolution-, LTE-, Modul sein. Das Kommunikationsnetzwerk ist beispielsweise ein Mobilfunknetzwerk. Das Mobilfunknetzwerk kann mit dem Internet verbunden oder Teil des Internets sein. Alternativ ist das Kommunikationsnetzwerk das Internet. Dadurch können bestehende Systeme wie Cloud-Dienste direkt an das Datenverarbeitungsgerät angebunden werden. Auch kann eine Fernwartung der mindestens einen Sensoreinheit über das Datenverarbeitungsgerät ermöglicht werden. Ferner ermöglicht die genannte Ausgestaltung des ersten Kommunikationsmoduls eine vorteilhafte Einbindung des Datenverarbeitungsgeräts mit wenig Installations- und Einrichtungsaufwand in das Kommunikationsnetzwerk.

Beispielsweise ist das LoRa-Kommunikationsmodul über eine Drahtverbindung, wie beispielsweise eine Leiterbahnverbindung oder eine Kabelverbindung, innerhalb des Datenverarbeitungsgeräts mit dem LoRa-Netzwerkserver und/oder dem LoRa-Anwendungsserver verbunden. Das Datenverarbeitungsgerät kann eine Recheneinheit umfassen, welche als der LoRa-Netzwerkserver und/oder als der LoRa-Anwendungsserver eingerichtet ist. Beispielsweise umfasst die Recheneinheit den LoRa-Netzwerkserver und/oder den LoRa-Anwendungsserver. Die Recheneinheit kann weitere Bestandteile umfassen. Der LoRa-Netzwerkserver, der LoRa-Anwendungsserver und/oder die weiteren Bestandteile können jeweils als Computerprogramm, Software oder Softwaremodul realisiert sein, das bzw. die von der Recheneinheit ausgeführt wird. Die Recheneinheit kann mit dem LoRa-Kommunikationsmodul verbunden sein. Die Recheneinheit kann zusätzlich mit dem ersten Kommunikationsmodul verbunden sein, vorzugsweise über eine Drahtverbindung. Hierdurch wird ein kompakter Aufbau des Datenverarbeitungsgeräts ermöglicht und es kann eine sichere Verbindung zwischen der mindestens einen Sensoreinheit und einem Empfänger in dem Kommunikationsnetzwerk bereitgestellt werden.

Das Datenverarbeitungsgerät kann als ein Gateway ausgebildet sein, welcher eine Kommunikationsverbindung zwischen der mindestens einen Sensoreinheit und dem LoRa-Netzwerkserver und/oder dem LoRa-Anwendungsserver bereitstellt. Insbesondere kann der Gateway einstückig, d.h., in einem Gehäuse ausgebildet sein. Beispielsweise ist das Datenverarbeitungsgerät dazu eingerichtet, ein Campus-Netzwerk bereitzustellen, in welches die mindestens eine Sensoreinheit eingebunden ist. Hierdurch können viele Sensoreinheiten mit dem LoRa-Netzwerkserver und/oder dem LoRa-Anwendungsserver, und mit dem Kommunikationsnetzwerk verbunden werden, auch wenn die einzelnen Sensoreinheiten für sich genommen keinen Zugriff auf das Kommunikationsnetzwerk haben. Ferner ist die Bereitstellung eines Campus-Netzwerks insbesondere zum Einbinden von Sensoreinheiten eines einzelnen Haushalts energetisch vorteilhaft gegenüber Lösungen, die das Einbinden von Sensoreinheiten in weiteren räumlichen Bereichen abdecken.

Der LoRa-Netzwerkserver kann dazu eingerichtet sein, die empfangenen Messdaten über das erste Kommunikationsmodul an das Kommunikationsnetzwerk zu senden, beispielsweise an einen LoRa-Anwendungsserver in dem Kommunikationsnetzwerk (im Folgenden stets als "separater LoRa-Anwendungsserver" bezeichnet). Der LoRa-Netzwerkserver kann dazu eingerichtet sein, ausschließlich die empfangenen Messdaten, also keine weiteren Messdaten, über das erste Kommunikationsmodul an das Kommunikationsnetzwerk zu senden. Hierdurch kann die zu übertragende Datenmenge reduziert werden.

Der LoRa-Netzwerkserver kann alternativ oder zusätzlich dazu eingerichtet sein, die ausgewählten Messdaten durch Auswahl von Messdaten mindestens einer identifizierten Sensoreinheit zu bestimmen. Hierzu kann der LoRa-Netzwerkserver eine vorbekannte Erkennungsinformation mit einer Identifizierungsinformation der die Messdaten sendenden Sensoreinheit vergleichen. Die Messdaten einer Sensoreinheit können zusammen oder separat von der Identifizierungsinformation derselben Sensoreinheit empfangen werden. Beispielsweise umfasst das Datenverarbeitungsgerät eine Speichereinheit, in der die Erkennungsinformation gespeichert ist, und auf welche der LoRa-Netzwerkserver zugreifen kann. Die Erkennungsinformation kann einen Anwendungsschlüssel, AppKey, und/oder einen Entwicklerschlüssel, DevKey, umfassen. Das Datenverarbeitungsgerät kann dazu eingerichtet sein, ein dediziertes Netzwerk bereitzustellen, in welches zumindest oder nur die identifizierten Sensoreinheiten eingebunden sind. Der LoRa-Netzwerkserver kann ferner dazu eingerichtet sein, die ausgewählten Messdaten über das erste Kommunikationsmodul an das Kommunikationsnetzwerk zu senden, beispielsweise an den separaten LoRa-Anwendungsserver. Der LoRa-Netzwerkserver kann ferner dazu eingerichtet sein, ausschließlich die ausgewählten Messdaten, also keine weiteren Messdaten, an das Kommunikationsnetzwerk zu senden. Hierdurch kann die zu übertragende Datenmenge reduziert werden.

Der LoRa-Anwendungsserver der Datenverarbeitungseinheit ist beispielsweise dazu eingerichtet, den mindestens einen Messwert aus den ausgewählten Messdaten zu ermitteln, beispielsweise ausschließlich aus den ausgewählten Messdaten. Hierdurch kann eine schnelle Datenverarbeitung und eine zuverlässige Messwertermittlung sichergestellt werden. Der LoRa-Anwendungsserver kann auch als (LoRa-) Application Server bezeichnet werden. Beispielsweise ist der LoRa-Netzwerkserver dazu eingerichtet, die ausgewählten Messdaten zu bestimmen und an den LoRa-Anwendungsserver weiterzuleiten. Hierzu können die ausgewählten Messdaten von dem LoRa-Netzwerkserver in der Speichereinheit gespeichert werden, und der LoRa-Anwendungsserver kann dazu eingerichtet sein, die gespeicherten ausgewählten Messdaten aus der Speichereinheit zu lesen. Der LoRa-Anwendungsserver greift in einem Beispiel auf eine Umwandlungsinformation zu, die für die mindestens eine Sensoreinheit spezifisch ist, deren Messdaten ausgewählt wurden. Die Umwandlungsinformation gibt beispielsweise an, wie die Messdaten einer Sensoreinheit in Messwerte umgerechnet werden können. Die Umwandlungsinformation kann in der Speichereinheit gespeichert sein. Beispielsweise ist der LoRa-Anwendungsserver ferner dazu eingerichtet, den mindestens einen Messwert über das erste Kommunikationsmodul an das Kommunikationsnetzwerk zu senden. Der LoRa-Anwendungsserver kann dazu eingerichtet sein, ausschließlich den mindestens einen Messwert, also keine weiteren Messwerte, über das erste Kommunikationsmodul an das Kommunikationsnetzwerk zu senden. Hierdurch kann die zu übertragende Datenmenge reduziert werden.

Das Datenverarbeitungsgerät kann dazu eingerichtet sein, eine Kommunikationsverbindung bereitzustellen, welche die mindestens eine Sensoreinheit mit mindestens einem Cloud-Dienst verbindet. Diese Kommunikationsverbindung ist vorzugsweise verschlüsselt. Der mindestens eine Cloud-Dienst kann von dem separaten LoRa-Anwendungsserver bereitgestellt werden. Der Cloud-Dienst ist insbesondere eine Internetanwendung und kann dazu eingerichtet sein, die von dem Datenverarbeitungsgerät an das Kommunikationsnetzwerk gesendeten Daten zu verarbeiten. Beispielsweise ist der Cloud-Dienst dazu eingerichtet, eine Analyse der Messdaten, der ausgewählten Messdaten und/oder des mindestens einen Messwerts durchzuführen. Der Cloud-Dienst kann dazu eingerichtet sein, aus den an das Kommunikationsnetzwerk gesendeten Daten einen aktuellen, bisherigen oder erwarteten Ressourcenverbrauch und/oder eine aktuelle, bisherige oder erwartete Ressourceneinspeisung zu bestimmen. Der Cloud-Dienst kann ferner dazu eingerichtet sein, aus dem bestimmten Ressourcenverbrauch bzw. der bestimmten Ressourceneinspeisung und einem Tarifentgelt ein voraussichtliches Abrechnungsentgelt für einen Haushalt zu bestimmen.

Gemäß einem Ausführungsbeispiel umfasst das Datenverarbeitungsgerät ferner ein zweites Kommunikationsmodul, das dazu eingerichtet ist, von einer Weitverkehrsnetz-, WAN-, Schnittstelle eines Smart Meter Gateways, SMGw, Daten zu empfangen. Das zweite Kommunikationsmodul kann ein Ethernet-, ETH-, Modul sein. Die Daten können eine(n) von an das SMGw angeschlossenen Zählern ermittelte(n) Ressourcenverbrauch und/oder -einspeisung beschreiben. Das Datenverarbeitungsgerät kann dazu eingerichtet sein, die von dem zweiten Kommunikationsmodul empfangenen Daten des SMGw an ein Kommunikationsnetzwerk zu senden, beispielsweise an dasselbe Kommunikationsnetzwerk, an welches die Messdaten, die ausgewählten Messdaten und/oder der mindestens eine Messwert gesendet werden (können). Beispielsweise ist das Datenverarbeitungsgerät dazu eingerichtet, die von dem zweiten Kommunikationsmodul empfangenen Daten des SMGw über das erste Kommunikationsmodul an das Kommunikationsnetzwerk zu senden. Hierdurch kann eine Kommunikationsverbindung des SMGw mit dem Kommunikationsnetzwerk bereitgestellt werden. Insbesondere kann dies das Auslesen von Abrechnungsdaten des SMGw durch autorisierte Netzwerkteilnehmer ermöglichen. Durch das erste Kommunikationsmodul können die Daten des SMGw über ein Mobilfunknetz an das Internet gesendet und von diesem empfangen werden, wodurch ein einfaches Auslesen der Daten des SMGw und eine Fernwartung des SMGw ermöglicht wird.

Das Datenverarbeitungsgerät ist gemäß einem Ausführungsbeispiel dazu eingerichtet, eine gesicherte Kommunikationsverbindung zwischen dem SMGw und mindestens einem autorisierten Netzwerkteilnehmer bereitzustellen. Das Datenverarbeitungsgerät kann dazu eingerichtet sein, eine gesicherte Kommunikationsverbindung zwischen dem SMGw und mindestens einem externen Marktteilnehmer, EMT, und/oder mindestens einem Gateway-Administrator, GWA, bereitzustellen. Die gesicherte Kommunikationsverbindung kann eine verschlüsselte Kommunikationsverbindung sein. Die gesicherte Kommunikationsverbindung erfüllt vorzugsweise die Technische Richtlinie TR-03109-1 des Bundesamts für Sicherheit in der Informationstechnik, BSI. Beispielsweise wird die gesicherte Kommunikationsverbindung durch das Datenverarbeitungsgerät über das erste und das zweite Kommunikationsmodul bereitgestellt. Hierdurch können die Daten des SMGw, beispielsweise abrechnungsrelevante Daten (Abrechnungsdaten), gemäß den gesetzlichen Bestimmungen an den EMT und/oder den GWA übertragen werden. Ferner kann der GWA eine Fernwartung und/oder Konfiguration des SMGw über die gesicherte Kommunikationsverbindung vornehmen.

Die über das zweite Kommunikationsmodul empfangenen Daten können einen Ressourcenverbrauch und/oder eine Ressourceneinspeisung eines ersten Zeitfensters anzeigen. Diese Daten können insbesondere einen Ressourcenverbrauch und/oder eine Ressourceneinspeisung zu einer ersten Mehrzahl an Messzeitpunkten anzeigen, wobei die erste Mehrzahl an Messzeitpunkten zumindest an einem Beginn und an einem Ende des ersten Zeitfensters liegt. Die Messdaten, insbesondere die von dem Datenverarbeitungsgerät empfangenen Messdaten, können einen Ressourcenverbrauch und/oder eine Ressourceneinspeisung eines zweiten Zeitfensters anzeigen. Die Messdaten können insbesondere einen Ressourcenverbrauch und/oder eine Ressourceneinspeisung zu einer zweiten Mehrzahl an Messzeitpunkten anzeigen, wobei die zweite Mehrzahl an Messzeitpunkten zumindest an einem Beginn und an einem Ende des zweiten Zeitfensters lieg. Das erste Zeitfenster kann sich von dem zweiten Zeitfenster unterscheiden. Das zweite Zeitfenster kann insbesondere kürzer sein als das erste Zeitfenster. Beispielsweise zeigen die über das zweite Kommunikationsmodul von dem SMGw empfangenen Daten einen Ressourcenverbrauch und/oder eine Ressourceneinspeisung der letzten 24 Stunden an. Demgegenüber können die Messdaten einen Ressourcenverbrauch und/oder eine Ressourceneinspeisung eines kürzeren Zeitfensters anzeigen, also zum Beispiel 5 Stunden, 1 Stunde, 30 Minuten oder 5 Minuten. Der LoRa-Netzwerkserver bzw. die Recheneinheit 6 kann dazu eingerichtet sein, eine Konfigurationsnachricht an die mindestens eine Sensoreinheit zu senden, welche die Sensoreinheit dazu konfiguriert, die Messdaten derart zu senden, dass diese einen Ressourcenverbrauch und/oder eine Ressourceneinspeisung eines von der Konfigurationsnachricht vorgegebenen Zeitfensters anzeigen. Der LoRa-Anwendungsserver oder der Cloud-Dienst kann dazu eingerichtet sein, das vorgegebene Zeitfenster festzulegen und an den LoRa-Netzwerkserver weiterzugeben. Die Konfigurationsnachricht kann von dem Cloud-Dienst an die mindestens eine Sensoreinheit gesendet werden, beispielsweise über das erste Kommunikationsmodul, die Recheneinheit und das LoRa-Kommunikationsmodul. Demgemäß kann eine zeitnahe Bestimmung des mindestens einen Messwerts ermöglicht werden. Dadurch kann ein bisheriger, aktueller und/oder voraussichtlicher Ressourcenverbrauch (bzw. Ressourceneinspeisung) zeitnäher ermittelt werden.

Alternativ oder zusätzlich können die über das zweite Kommunikationsmodul empfangenen Daten einen Ressourcenverbrauch und/oder eine Ressourceneinspeisung in einer ersten zeitlichen Auflösung anzeigen. Die Messdaten, insbesondere die von dem Datenverarbeitungsgerät empfangenen Messdaten, können einen Ressourcenverbrauch und/oder eine Ressourceneinspeisung in einer zweiten zeitlichen Auflösung anzeigen. Die zweite Auflösung kann sich von der ersten zeitlichen Auflösung unterscheiden. Die zweite Auflösung kann insbesondere eine höhere Auflösung sein als die erste Auflösung. In anderen Worten können die über das zweite Kommunikationsmodul empfangenen Daten einen Ressourcenverbrauch und/oder eine Ressourceneinspeisung bei mit einem ersten Zeitintervall beabstandeten Messzeitpunkten anzeigen, und die Messdaten können einen Ressourcenverbrauch und/oder eine Ressourceneinspeisung bei mit einem zweiten Zeitintervall beabstandeten Messzeitpunkten anzeigen, wobei das zweite Zeitintervall kürzer ist als das erste Zeitintervall. Beispielsweise zeigen die über das zweite Kommunikationsmodul von dem SMGw empfangenen Daten einen Ressourcenverbrauch und/oder eine Ressourceneinspeisung in fünfzehnminütigen Intervallen an. In diesem Beispiel zeigen die Daten also eine(n) zu Messzeitpunkten vorliegenden Ressourcenverbrauch und/oder Ressourceneinspeisung an, wobei einander folgende Messzeitpunkte jeweils 15 Minuten beabstandet sind.

Demgegenüber können die Messdaten einen Ressourcenverbrauch und/oder eine Ressourceneinspeisung in einer höheren zeitlichen Auflösung anzeigen, also zum Beispiel in fünfminütigen, einminütigen, dreißigsekündigen oder zehnsekündigen Intervallen. Der LoRa-Netzwerkserver kann dazu eingerichtet sein, eine Konfigurationsnachricht an die mindestens eine Sensoreinheit zu senden, wobei die Sensoreinheit dazu konfiguriert, die Messdaten derart zu senden, dass diese einen Ressourcenverbrauch und/oder eine Ressourceneinspeisung in einer von der Konfigurationsnachricht vorgegebenen zeitlichen Auflösung anzeigen. Der LoRa-Anwendungsserver oder der Cloud-Dienst kann dazu eingerichtet sein, die zeitliche Auflösung festzulegen und an den LoRa-Netzwerkserver weiterzugeben. Die Konfigurationsnachricht kann von dem Cloud-Dienst an die mindestens eine Sensoreinheit gesendet werden, beispielsweise über das erste Kommunikationsmodul, die Recheneinheit und das LoRa-Kommunikationsmodul. Demgemäß können pro Zeitspanne mehr Messwerte bestimmt werden. Dadurch kann ein bisheriger, aktueller und/oder voraussichtlicher Ressourcenverbrauch (bzw. Ressourceneinspeisung) präziser ermittelt werden.

Beispielsweise umfasst das Datenverarbeitungsgerät ein drittes Kommunikationsmodul, das dazu eingerichtet ist, Messdaten eines Basiszählers und/oder einer modernen Messeinrichtung, mME, zu empfangen, beispielsweise über ein lokales metrologisches Netz, LMN. Beispielsweise werden diese Messdaten des Basiszählers und/oder der mME von dem dritten Kommunikationsmodul direkt empfangen, also nicht über das SMGw. Das dritte Kommunikationsmodul kann eine erste Schnittstelle nach dem EIA-485-Standard aufweisen, die zur Verbindung mit dem Basiszähler oder der mME ausgebildet ist. Das dritte Kommunikationsmodul kann eine zweite Schnittstelle aufweisen, die zur Verbindung mit dem Basiszähler oder der mME über das LMN ausgebildet ist. Das dritte Kommunikationsmodul ist beispielsweise über eine Drahtverbindung mit der Recheneinheit verbunden. In einer Variante gelten die obigen Ausführungen zu den Messdaten der mindestens einen Sensoreinheit ebenso für die Messdaten des Basiszählers und/oder der mME, sodass mit "Messdaten" in dieser Variante stets nicht nur die Messdaten der mindestens einen Sensoreinheit, sondern auch die Messdaten des Basiszählers und/oder der mME gemeint sind. Die Recheneinheit kann dazu eingerichtet sein, die Messdaten des Basiszählers und/oder der mME an das Kommunikationsnetzwerk zu senden, beispielsweise über das erste Kommunikationsmodul. Beispielsweise ist die Recheneinheit dazu eingerichtet, zumindest einen für eine Messgröße repräsentativen Messwert aus den Messdaten des Basiszählers und/oder der mME zu bestimmen. Alternativ oder zusätzlich kann die Recheneinheit dazu eingerichtet sein, mindestens einen für eine Messgröße repräsentativen Messwert aus den Messdaten des Basiszählers und/oder der mME zu bestimmen und an das Kommunikationsnetzwerk zu senden, beispielsweise über das erste Kommunikationsmodul und/oder an den mindestens einen Cloud-Dienst. Beispielsweise ist die Recheneinheit dazu eingerichtet, den mindestens einen Messwert und/oder die Messdaten des Basiszählers und/oder der mME über eine gesicherte Verbindung an einen Kommunikations-Endpunkt wie z.B. den mindestens einen Cloud-Dienst zu senden, beispielsweise über das erste Kommunikationsmodul. Diese gesicherte Verbindung kann eine transportgesicherte Verbindung sein, beispielsweise eine Verbindung mit Transportschichtsicherheit (Transport Layer Security, TLS). Diese gesicherte Verbindung kann ein Kommunikationsprotokoll verwenden, welches von Anforderungen des Kommunikations-Endpunkts, also beispielsweise Anforderungen des mindestens einen Cloud-Dienstes, vorgegeben wird. Beispiele solcher Kommunikationsprotokolle sind Representational State Transfer (REST) oder Message Queuing Telemetry Transport (MQTT). Demgemäß kann eine Verbindung des Basiszählers und/oder der mME mit dem Kommunikationsnetzwerk bereitgestellt werden, auch ohne ein Dazwischenschalten des SMGw. In anderen Worten kann die Recheneinheit als Netzwerkserver und/oder Anwendungsserver für den Basiszähler und/oder die mME eingerichtet sein. Es kann bereits direkt von dem Datenverarbeitungsgerät aus eine sternförmige Datenkommunikation realisiert werden, ohne einen Umweg über einen Proxy in einem Backend-System, was die Flexibilität des Datenverarbeitungsgeräts erhöht. Auch können die Messdaten des Basiszählers und/oder der mME mit den Messdaten der mindestens einen Sensoreinheit von der Recheneinheit kombiniert, korreliert oder anderweitig verarbeitet werden. Hierdurch wird die Flexibilität des Datenverarbeitungsgeräts weiter erhöht und ein bisheriger, aktueller und/oder voraussichtlicher Ressourcenverbrauch (bzw. Ressourceneinspeisung) kann präziser ermittelt werden.

Das Datenverarbeitungsgerät kann ferner ein viertes Kommunikationsmodul umfassen, das dazu eingerichtet ist, die Messdaten des Basiszählers und/oder der mME an ein Smart Meter Gateway, SMGw, zu senden. Vorzugsweise erfolgt dies über ein lokales metrologisches Netz. Das SMGw, an welches die Messdaten des Basiszählers und/oder der mME über das vierte Kommunikationsmodul gesendet werden, kann dem SMGw entsprechen, von dem die Daten über das zweite Kommunikationsmodul empfangen werden. Das vierte Kommunikationsmodul kann eine dritte Schnittstelle aufweisen, die zur Verbindung mit einer LMN-Schnittstelle des SMGw über das LMN ausgebildet ist. In einem Beispiel umfasst das Datenverarbeitungsgerät einen mit der Technischen Richtlinie TR-03109-1 des BSI kompatiblen Adapter, welcher auch als BSI-konformer Adapter für Bestandskunden, BAB-Adapter, bezeichnet werden kann. Der BAB-Adapter umfasst die dritte Schnittstelle und die erste und/oder zweite Schnittstelle. Der BAB-Adapter kann mit dem ersten Kommunikationsmodul verbunden sein, beispielsweise über die Recheneinheit. Demgemäß kann eine den gesetzlichen Bestimmungen entsprechende Kommunikationsverbindung zwischen dem SMGw und dem Basiszähler und/oder der mME bereitgestellt werden, wobei keine weiteren separaten Adapter zur Einbindung des Basiszählers und/oder der mME benötigt werden. So wird ein kompakter und richtlinienkonformer Aufbau ermöglicht.

Gemäß einem zweiten Aspekt der vorliegenden Offenbarung wird ein Datenverarbeitungssystem bereitgestellt, welches das Datenverarbeitungsgerät nach dem ersten Aspekt umfasst. Das Datenverarbeitungssystem umfasst ferner die zum ersten Aspekt beschriebene mindestens eine Sensoreinheit. Alternativ oder zusätzlich zu der mindestens einen Sensoreinheit kann das Datenverarbeitungssystem das zum ersten Aspekt beschriebene SMGw umfassen. Das Datenverarbeitungssystem kann ferner den zum ersten Aspekt beschriebenen Basiszähler und/oder die zum ersten Aspekt beschriebene mME umfassen. In einem Beispiel umfasst das Datenverarbeitungssystem ferner die zum ersten Aspekt beschriebenen EMTs, GWAs und/oder Cloud-Dienste.

### KURZE BESCHREIBUNG DER ZEICHNUNGEN

Weitere Vorteile, Einzelheiten und Merkmale der hier beschriebenen Vorrichtungen und Systeme ergeben sich aus der nachfolgenden Beschreibung von Ausführungsbeispielen sowie aus den Figuren, wobei dieselben strukturellen und/oder funktionellen Merkmale durchgehend mit denselben Bezugszeichen gekennzeichnet sind.
Fig. 1 zeigt eine schematische Darstellung einer beispielhaften Ausführungsform eines Datenverarbeitungsgeräts mit einem LoRa-Kommunikationsmodul, einem ersten Kommunikationsmodul und einem LoRa-Server;
Fig. 2 zeigt eine schematische Darstellung einer beispielshaften Ausführungsform eines Datenverarbeitungssystems mit dem Datenverarbeitungsgerät;
Fig. 3 zeigt ein beispielhaftes Verfahren zum Ändern mindestens einer Sensoreinheit, von der das LoRa-Kommunikationsmodul des Datenverarbeitungsgeräts Messdaten empfangen kann;
Fig. 4 zeigt ein beispielhaftes Verfahren einer Aktivierung des Datenverarbeitungsgeräts; und
Fig. 5 zeigt ein beispielhaftes Verfahren zum Einrichten einer gesicherten Verbindung zwischen einem Smart Meter Gateway, SMGw, und einem Gateway-Administrator, GWA, über das Datenverarbeitungsgerät.

### DETAILLIERTE BESCHREIBUNG

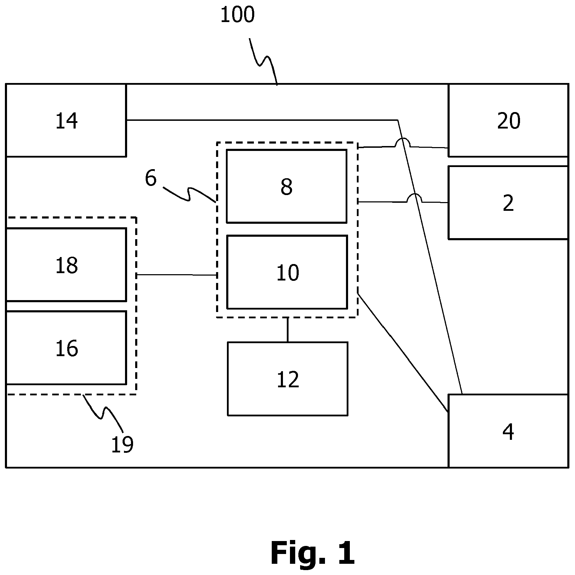

Die Fig. 1 zeigt ein Datenverarbeitungsgerät 100 mit einem Niedrigenergie-, LoRa-, Kommunikationsmodul 2, einem ersten Kommunikationsmodul 4 und einer Recheneinheit 6. Die Recheneinheit 6 ist in dieser Ausführungsform als LoRa-Netzwerkserver 8 und LoRa-Anwendungsserver 10 ausgebildet, wobei sie auch nur als eine diese beiden Serverarten ausgebildet sein kann. Beispielsweise ist die Recheneinheit 6 dazu eingerichtet, ein Computerprogramm auszuführen, welches die Recheneinheit 6 als LoRa-Netzwerkserver 6 und LoRa-Anwendungsserver einrichtet. Die Recheneinheit 6 ist ferner zur Bereitstellung weiterer Funktionen eingerichtet, wie nachstehend noch erläutert wird. In einer alternativen Ausführungsform umfasst das Datenverarbeitungsgerät 100 nicht das erste Kommunikationsmodul 4. Das erste Kommunikationsmodul 4 ist über eine Drahtverbindung mit der Recheneinheit 6 verbunden. Die Recheneinheit 6 ist über eine weitere Drahtverbindung mit dem ersten Kommunikationsmodul 4 verbunden.

Das LoRa-Kommunikationsmodul 2 ist dazu eingerichtet, von mindestens einer Sensoreinheit (nicht dargestellt) Messdaten zu empfangen, vorzugsweise über das Niedrigenergieweitverkehrsnetz-, LoRaWAN-, Protokoll. Die Messdaten der mindestens einen Sensoreinheit zeigen vorzugsweise einen Ressourcenverbrauch und/oder eine Ressourceneinspeisung an. Die mindestens eine Sensoreinheit umfasst daher beispielsweise einen Stromeinspeisungszähler, einen Wasserverbrauchszähler, einen Wärmemengenzähler, einen Raumklimasensor und/oder einen Fensteröffnungssensor. Ein geöffnetes Fenster weist im Winter auf eine erhöhte benötigte Wärmemenge hin, und ein Stromeinspeisungszähler liefert die beispielsweise von einer Photovoltaikanlage in ein Energieversorgungsnetz eingespeiste Strommenge.

Der LoRa-Netzwerkserver 8 ist in dieser Ausführungsform dazu eingerichtet, die empfangenen Daten zu sammeln und für eine Weiterverarbeitung zur Verfügung zu stellen. Insbesondere kann der LoRa-Netzwerkserver 8 aus den empfangenen Messdaten die Messdaten identifizierter Sensoreinheiten auswählen. Hierzu kann der LoRa-Netzwerkserver 8 auf eine Erkennungsinformation zugreifen, welche in einer Speichereinheit 12 des Datenverarbeitungsgeräts 100 gespeichert ist, und diese mit einer Identifizierungsinformation vergleichen, die einer einzelnen Sensoreinheiten zugeordnet ist, von der die Messdaten empfangen werden. Der LoRa-Anwendungsserver 10 kann die von dem LoRa-Netzwerkserver 8 zur Verfügung gestellten Messdaten, also beispielsweise die ausgewählten Messdaten, entgegennehmen und in mindestens einen für eine Messgröße repräsentativen Messwert umwandeln, zum Beispiel in einen Messwert in der Einheit Kilowattstunden oder Grad Celsius. Für diese Umwandlung kann auch der LoRa-Anwendungsserver auf die Speichereinheit 12 zugreifen. Beispielsweise ist in der Speichereinheit 12 eine Umwandlungsinformation gespeichert, die zur Bestimmung des Messwerts von dem LoRa-Anwendungsserver verwendet wird.

Das erste Kommunikationsmodul 4 ist vorzugsweise ein LTE-Modul und dazu eingerichtet, die Messdaten, die ausgewählten Messdaten und/oder den mindestens einen Messwert an ein Kommunikationsnetzwerk (nicht dargestellt) zu senden. Das Kommunikationsnetzwerk ist beispielsweise das Internet. Das Datenverarbeitungsgerät 100 kann dazu eingerichtet sein, über das erste Kommunikationsmodul eine Kommunikationsverbindung mit mindestens einem Cloud-Dienst (nicht dargestellt), beispielsweise einem separaten LoRa-Anwendungsserver, bereitzustellen.

Das Datenverarbeitungsgerät 100 umfasst in dieser Ausführungsform ferner ein zweites Kommunikationsmodul 14, das dazu eingerichtet ist, von einer Weitverkehrsnetz-, WAN-, Schnittstelle eines Smart Meter Gateways, SMGw, (nicht dargestellt) Daten zu empfangen. Bei dem zweiten Kommunikationsmodul 12 kann es sich um ein Ethernet,- ETH-, Modul handeln.

Das Datenverarbeitungsgerät ist in dieser Ausführungsform dazu eingerichtet, eine gemäß der Richtlinie TR-03109-1 des Bundesamts für Sicherheit in der Informationstechnik gesicherte Kommunikationsverbindung zwischen dem SMGw und mindestens einem externen Marktteilnehmer, EMT, und/oder mindestens einem Gateway-Administrator, GWA, bereitzustellen. Die von dem zweiten Kommunikationsmodul empfangenen Daten des SMGw können über die gesicherte Kommunikationsverbindung gesendet werden. In Fig. 1 ist ein Teil der gesicherten Verbindung als Verbindung zwischen dem ersten Kommunikationsmodul 4 und dem zweiten Kommunikationsmodul 14 angedeutet. Die Recheneinheit 6 kann dazu eingerichtet sein, die gesicherte Verbindung bereitzustellen. Hierzu ist die Recheneinheit 6 gemäß einem Beispiel nicht nur mit dem ersten Kommunikationsmodul 4, sondern auch mit dem zweiten Kommunikationsmodul 14 verbunden (nicht dargestellt).

Üblicherweise zeigen derartige über die WAN-Schnittstelle des SMGw ausgegebene Daten einen Ressourcenverbrauch eines 24-Stundenzeitraums in fünfzehnminütigen Intervallen an. Vorliegend ist die mindestens eine Sensoreinheit jedoch nicht über ein SMGw, sondern über LoRa bzw. LoRaWAN mit dem Datenverarbeitungsgerät 100 verbunden. Dies ermöglicht es, von der Sensoreinheit Messdaten auszulesen bzw. zu empfangen, welche einen Ressourcenverbrauch und/oder eine Ressourceneinspeisung eines kürzeren Zeitfensters (z.B. 5h, 1h oder 30 min) anzeigen. Außerdem können die Messdaten einen Ressourcenverbrauch und/oder eine Ressourceneinspeisung in einer höheren zeitlichen Auflösung anzeigen, also beispielsweise in fünfminütigen oder einminütigen Intervallen.

In der dargestellten Ausführungsform umfasst das Datenverarbeitungsgerät 100 ein drittes Kommunikationsmodul 16, das dazu eingerichtet ist, Messdaten eines Basiszählers und/oder einer modernen Messeinrichtung, mME, (nicht dargestellt) zu empfangen. Das Datenverarbeitungsgerät 100 weist ferner ein viertes Kommunikationsmodul 18 auf, das dazu eingerichtet ist, die Messdaten des Basiszählers und/oder der mME an eine Schnittstelle des Smart Meter Gateway, SMGw, zu senden, vorzugsweise an eine Schnittstelle für ein lokales metrologisches Netz, LMN. Das dritte und vierte Kommunikationsmodul 16, 18 können in einem BSIkonformen Adapter für Bestandskunden, BAB-Adapter 19, zusammengefasst sein. Der BAB-Adapter 19 kann über eine Drahtverbindung mit der Recheneinheit 6 verbunden sein. Alternativ kann das dritte und/oder das vierte Kommunikationsmodul 16, 18 direkt über eine Drahtverbindung mit der Recheneinheit 6 verbunden sein.

Wie in Fig. 1 gezeigt, kann das Datenverarbeitungsgerät 100 weitere Kommunikationsmodule aufweisen. Beispielshaft ist ein fünftes Kommunikationsmodul 20 dargestellt, welches dazu eingerichtet ist, Messdaten mindestens einer weiteren Sensoreinheit (nicht dargestellt) zu empfangen. Das fünfte Kommunikationsmodul 20 ist mit der Recheneinheit 6 über eine Drahtverbindung verbunden. Im Vergleich zu dem LoRa-Kommunikationsmodul 2 ist das fünfte Kommunikationsmodul 20 zur Kommunikation unter Verwendung eines anderen Kommunikationsprotokolls ausgelegt, beispielsweise als Meter-Bus-, MBus-, Kommunikationsmodul oder als drahtloses Meter-Bus, wMBus-, Kommunikationsmodul.

Die Recheneinheit 6 kann dazu eingerichtet sein, die über den BAB-Adapter 19, die über das dritte Kommunikationsmodul 16 und/oder die über das fünfte Kommunikationsmodul 20 empfangenen Messdaten zu verarbeiten. Beispielsweise ist die Recheneinheit 6 dazu eingerichtet, ein von dem Basiszähler verwendetes Kommunikationsprotokoll in ein von dem Cloud-Dienst verwendetes Kommunikationsprotokoll umzuwandeln. In anderen Worten können die über den BAB-Adapter 19, die über das dritte Kommunikationsmodul 16 und/oder die über das fünfte Kommunikationsmodul 20 empfangenen Messdaten unter Verwendung eines ersten Kommunikationsprotokolls (z.B. wMBus) von der Recheneinheit 6 empfangen und unter Verwendung eines anderen Kommunikationsprotokolls (z.B. MQTT) an das Kommunikationsnetzwerk gesendet werden. Beispielsweise ist die Recheneinheit dazu eingerichtet, eine Auswahl einzelner dieser Messdaten vorzunehmen und die ausgewählten Messdaten an das Kommunikationsnetzwerk zu senden. Die Recheneinheit 6 kann gemäß einem Beispiel aus diesen ausgewählten Messdaten mindestens einen für eine Messgröße repräsentativen Messwert bestimmen und an das Kommunikationsnetzwerk senden.

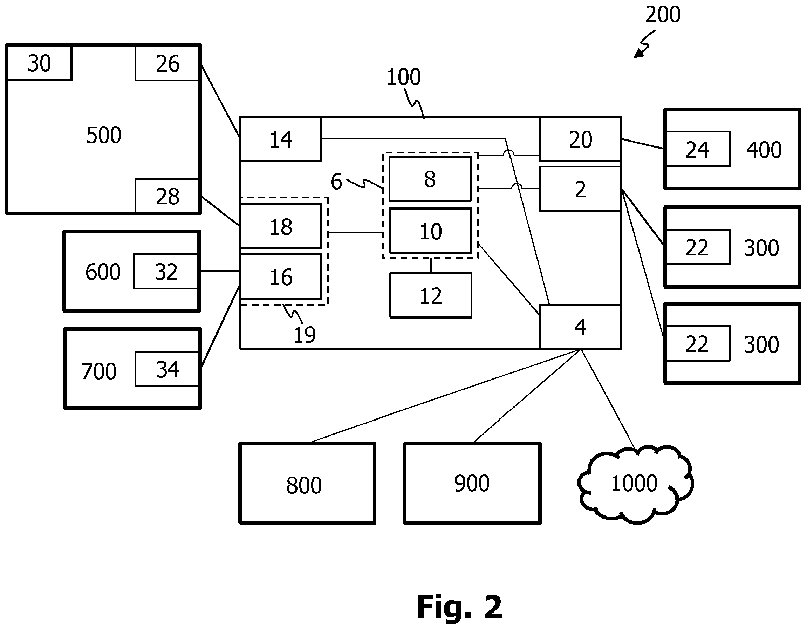

Fig. 2 zeigt ein Datenverarbeitungssystem 200. Das Datenverarbeitungssystem 200 umfasst das Datenverarbeitungsgerät 100 der Fig. 1. Außerdem umfasst das Datenverarbeitungssystem in dieser Ausführungsform die mindestens eine Sensoreinheit 300, die mindestens eine weitere Sensoreinheit 400, das SMGw 500, den Basiszähler 600, die mME 700, den EMT 800, den GWA 900 und den Cloud-Dienst 1000.

Es ist aus der Fig. 2 ersichtlich, dass die zumindest eine Sensoreinheit 300 eine LoRa-Kommunikationsschnittstelle 22 aufweist, über welche die Messdaten an das LoRa-Kommunikationsmodul 2 des Datenverarbeitungsgeräts 100 gesendet werden können. Auch kann eine Konfigurationsdatei auf umgekehrtem Wege an die mindestens eine Sensoreinheit 300 gesendet werden, sodass diese zum Senden von Messdaten konfiguriert wird, die Vorgaben entsprechen. Beispielsweise können die Vorgaben von dem Cloud-Dienst 1000, von dem LoRa-Anwendungsserver 10 oder von dem LoRa-Netzwerkserver 8 definiert werden und eine Eigenschaft der Messungen festlegen (z.B. eine Periodizität, ein Messintervall, eine Gesamtanzahl an Messungen pro Datenpaket, etc.).

Die mindestens eine weitere Sensoreinheit 400 umfasst in der dargestellten Ausführungsform eine wMBus-Kommunikationsschnittstelle 24, über welche eine Kommunikationsverbindung mit dem fünften Kommunikationsmodul 20 ermöglicht wird, sodass die Messdaten der weiteren Sensoreinheit 400 an die Recheneinheit 6 übertragen werden können. Die Messdaten der weiteren Sensoreinheit 400 können von der Recheneinheit 6 über eine gesicherte TLS-Verbindung an einen Kommunikationsendpunkt wie z.B. den Cloud-Dienst 1000 gesendet werden.

Das SMGw 500 weist die oben erwähnte WAN-Schnittstelle 26 auf, die mit dem zweiten Kommunikationsmodul 14 verbunden ist. Die oben erwähnte LMN-Schnittstelle 28 des SMGw 500 ist mit dem vierten Kommunikationsmodul 18 verbunden. Außerdem umfasst das SMGw eine Heimverkehrsnetz-, HAN-, Schnittstelle 30 mit einer Schnittstelle für regelbare Erzeuger (Controllable Local System, CLS).

Der Basiszähler 600 ist über eine Schnittstelle 32 mit dem dritten Kommunikationsmodul 16 verbunden. Bei der Schnittstelle 32 kann es sich um eine Schnittstelle nach dem Standard EIA-485 handeln. Die mME 700 ist über eine Schnittstelle 34 mit dem dritten Kommunikationsmodul 16 verbunden, beispielsweise über ein lokales metrologisches Netz, LMN. Das dritte Kommunikationsmodul 16 kann eine Schnittstelle nach dem Standard EIA-485 und eine Schnittstelle zum Anschluss an das LMN aufweisen, welche beispielsweise von dem BAB-Adapter 19 umfasst werden. Die Recheneinheit 6 kann insbesondere dazu eingerichtet sein, über die Schnittstelle 32 nach dem Standard EIA-485 mit dem Basiszähler 600 zu kommunizieren. Die Messdaten des Basiszählers 600 und/oder der mME 700 können von der der Recheneinheit 6 über eine gesicherte TLS-Verbindung an einen Kommunikationsendpunkt wie z.B. den Cloud-Dienst 1000 gesendet werden.

Der EMT 800, der GWA 900 und der mindestens eine Cloud-Dienst 1000 sind alle über das erste Kommunikationsmodul 4 mit dem Datenverarbeitungsgerät 100 verbunden.

Der mindestens eine Cloud-Dienst 1000 kann eine Mehrzahl einzelner Cloud-Dienste umfassen. Beispielsweise umfasst der mindestens eine Cloud-Dienst einen Provisionierungsdienst, einen ersten Knotenpunkt des Internets der Dinge (erster IoT-Hub), einen zweiten Knotenpunkt des Internets der Dinge (zweiter IoT-Hub) und einen Gerätemanager für das Datenverarbeitungsgerät 100. Der Provisionierungsdienst ist beispielsweise ein "Azure"-Provisionierungsdienst der Firma Microsoft und der erste IoT-Hub kann ein "Azure" IoT-Hub sein. Der zweite IoT-Hub kann ein quelloffener IoT-Hub wie beispielsweise "Thingsboard" oder "Thinger.io" sein. Die Recheneinheit 6 kann Teil eines "Azure Sphere"-zertifizierten Chips sein.

Zur Verarbeitung von Messdaten der mindestens einen Sensoreinheit 300 werden die entsprechenden Messdaten zunächst über eine LoRa-Verbindung an das LoRa-Kommunikationsmodul 2 gesendet. Anschließend kann der LoRa-Netzwerkserver 8 einzelne Sensoreinheiten unter Rückgriff auf die in der Speichereinheit 12 gespeicherte Erkennungsinformation identifizieren und nur die ausgewählten Messdaten der identifizierten Sensoreinheiten an den LoRa-Anwendungsserver 10 weitergeben. Zusätzlich können die ausgewählten Messdaten an den Cloud-Dienst 1000 gesendet werden, beispielsweise an einen weiteren LoRa-Anwendungsserver oder an den zweiten IoT-Hub. Der LoRa-Anwendungsserver 10 kann aus den ausgewählten Messdaten, eventuell unter Rückgriff auf die in der Speichereinheit 12 gespeicherte Umwandlungsinformation, den mindestens einen Messwert ermitteln. Dieser Messwert kann dann an den mindestens einen Cloud-Dienst 1000 gesendet und/oder anderweitig weiterverarbeitet werden.

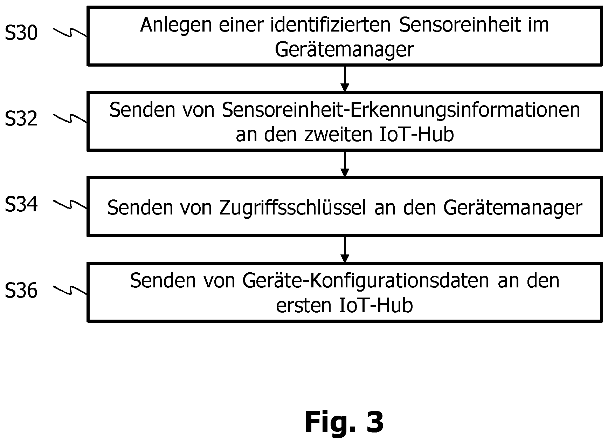

Um einzelne Sensoreinheiten der mindestens einen Sensoreinheit 300 zu entfernen oder hinzuzufügen, können Geräte-Konfigurationsdaten zur Konfiguration des Datenverarbeitungsgeräts 100 verwendet werden. Fig. 3 zeigt ein beispielhaftes Verfahren zum Ändern der mindestens einen Sensoreinheit 300.

In einem Schritt S30 wird in dem Gerätemanager eine Sensoreinheit angelegt, beispielsweise als identifizierte Sensoreinheit. Die angelegte Sensoreinheit kann mittels einer von dem Gerätemanager generierten Sensoreinheit-Erkennungsinformation als solche eindeutig erkannt werden.

In einem Schritt S32 wird die generierte Sensoreinheit-Erkennungsinformation von dem Gerätemanager an den zweiten IoT-Hub gesendet.

In einem Schritt S34 sendet der zweite IoT-Hub einen Zugriffsschlüssel an den Gerätemanager. Der Zugriffsschlüssel kann von dem zweiten IoT-Hub basierend auf der Sensoreinheit-Erkennungsinformation erzeugt werden. Bei dem Zugriffsschlüssel kann es sich um einen sogenannten "Access Token" handeln.

In einem Schritt S36 werden Geräte-Konfigurationsdaten von dem Gerätemanager an den ersten IoT-Hub gesendet. Die Geräte-Konfigurationsdaten können von dem Gerätemanager auf Grundlage des Zugriffsschlüssels generiert werden. Die Geräte-Konfigurationsdaten geben vorzugsweise eine Konfiguration des Datenverarbeitungsgeräts 100 und/oder der Recheneinheit 6 an. Die Geräte-Konfigurationsdaten können die oben beschriebene Erkennungsinformation umfassen, welche nach einem Senden (nicht dargestellt) an das Datenverarbeitungsgerät 100 in der Sensoreinheit 12 gespeichert werden kann. Die Geräte-Konfigurationsdaten können die generierte Sensoreinheit-Erkennungsinformation, die Umwandlungsinformation und/oder den Zugriffsschlüssel bzw. "Access Token" umfassen, die ebenso in der Sensoreinheit 12 gespeichert werden können.

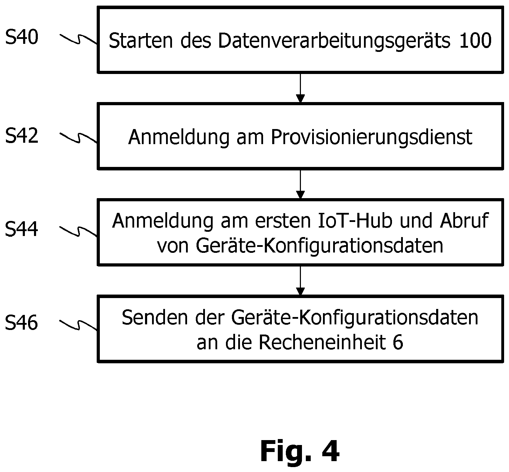

In Fig. 4 ist beispielhaft ein Verfahren einer Aktivierung des Datenverarbeitungsgeräts 100 dargestellt.

In einem ersten Schritt S40 wird das Datenverarbeitungsgerät 100 gestartet, beispielsweise durch Herstellen einer Energieversorgung der Recheneinheit 6. Hierzu kann ein Benutzer einen Startknopf des Datenverarbeitungsgeräts 100 drücken oder ein Netzkabel mit Versorgungsspannung an das Datenverarbeitungsgerät 100 anschließen.

In einem Schritt S42 wird eine Anmeldung der Recheneinheit 6 an dem Provisionierungsdienst vorgenommen. Hierzu kann die Recheneinheit 6 über das erste Kommunikationsmodul 2 mit dem Provisionierungsdienst kommunizieren.

In einem Schritt S44 wird eine Anmeldung der Recheneinheit 6 an dem ersten IoT-Hub vorgenommen. Hierzu kann die Recheneinheit 6 über das erste Kommunikationsmodul 2 mit dem ersten IoT-Hub kommunizieren. Außerdem werden von dem ersten IoT-Hub die Geräte-Konfigurationsdaten abgerufen. Die Geräte-Konfigurationsdaten können die oben beschriebene Erkennungsinformation, Umwandlungsinformation, Sensoreinheit-Erkennungsinformation und/oder Zugriffsschlüssel umfassen.

In einem Schritt S46 werden die Geräte-Konfigurationsdaten von dem ersten IoT-Hub über das erste Kommunikationsmodul 2 an die Recheneinheit 6 übertragen und die Recheneinheit 6 wird entsprechend konfiguriert. Beispielsweise ermöglichen oder bewirken die Geräte-Konfigurationsdaten die Herstellung einer Kommunikationsverbindung zwischen dem Datenverarbeitungsgerät 100 und zumindest einem von dem SMGw 500, dem Basiszähler 600, der mME 700, der mindestens einen Sensoreinheit 300 (beispielsweise einer gemäß dem Verfahren nach Fig. 3 hinzugefügten Sensoreinheit 300) und der mindestens einen weiteren Sensoreinheit 400. Die Geräte-Konfigurationsdaten können eine Klassifizierung von Sensoreinheiten in identifizierte und nicht identifizierte Sensoreinheiten ermöglichen oder bewirken. Beispielsweise ist der LoRa-Netzwerkserver 8 dazu eingerichtet, auf Grundlage der Geräte-Konfigurationsdaten die ausgewählten Messdaten zu bestimmen.

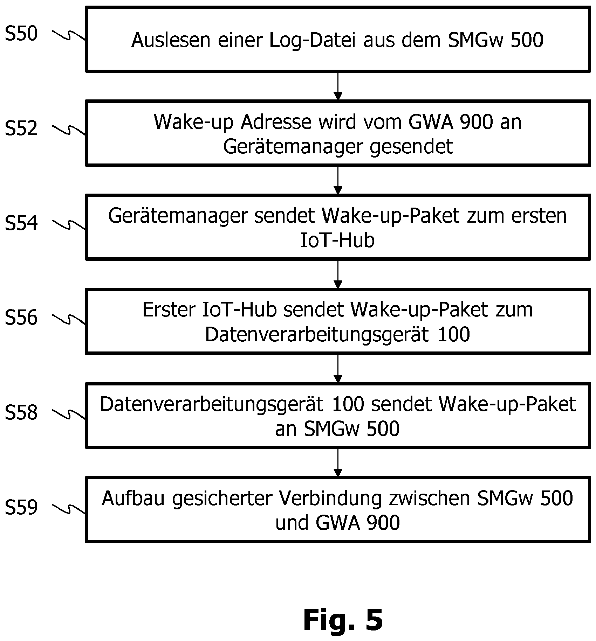

In Fig. 5 ist ein beispielhaftes Verfahren zum Einrichten der gesicherten Verbindung zwischen dem SMGw 500 und dem GWA 900 dargestellt.

In einem Schritt S50 wird eine Initialisierungsadresse bzw. Wake-up-Adresse von dem GWA 900 an den Gerätemanager gesendet. Die Initialisierungsadresse bzw. Wake-up-Adresse kann eine Adresse des SMGw 500 angeben, zu welchem eine Verbindung mit dem GWA 900 hergestellt werden soll, beispielsweise eine Netzwerkadresse oder eine Internetprotokoll-, IP-, Adresse.

In einem Schritt S52 sendet der Gerätemanager ein Wake-up-Paket an den ersten IoT-Hub. Das Wake-up-Paket ist ein Datenpaket und umfasst vorzugsweise die Initialisierungsadresse bzw. Wake-up-Adresse.

In einem Schritt S54 sendet der erste IoT-Hub das Wake-up-Paket an das Datenverarbeitungsgerät 100, vorzugsweise über das erste Kommunikationsmodul 2 an die Recheneinheit 6. Das Wake-up-Paket kann über einen direkten Methodenaufruf (Direct Method Call) an das Datenverarbeitungsgerät 100 übertragen werden.

In einem Schritt S56 wird das Wake-up-Paket von dem Datenverarbeitungsgerät 100 an das SMGw 500 gesendet. Beispielsweise wird das Wake-up-Paket von dem Datenverarbeitungsgerät 100 über das zweite Kommunikationsmodul 14 und die WAN-Schnittstelle 26 an das SMGw 500 gesendet. Das Wake-up-Paket kann von dem Datenverarbeitungsgerät 100 mittels User Datagram Protocol, UDP, an das SMGw 500 gesendet werden.

Nachdem durch das Beenden des Schritts S56 ein durchgehender Wake-Up-Call vom GWA 900 über das Datenverarbeitungsgerät 100 hin zum SMGw 500 erfolgt ist, wird in einem Schritt S58 von dem GWA 900 eine Log-Nachricht aus dem SMGw 500 ausgelesen. Diese Log-Nachricht kann eine Auflistung von Messwerten des Basiszählers 600 und der mME 700 umfassen, welche mit dem SMGw 500 verbunden sind.

In einem Schritt S59 wird die gesicherte Verbindung zwischen dem SMGw 500 und dem GWA 900 aufgebaut. Die gesicherte Verbindung kann basierend auf dem Wake-up-Paket aufgebaut werden. Das Datenverarbeitungsgerät 100 kann einen Kommunikationstunnel oder -kanal vom SMGw 500 zum GWA 900 bereitstellen. Der Kanal kann als Admin-Service-Kanal bezeichnet werden. Die gesicherte Verbindung entspricht wie bereits oben erwähnt vorzugsweise der BSI-Richtlinie TR-03109-1. Auch der Basiszähler 600 und die mME 700 können durch das Bereitstellen des BAB-Adapters 19 sicher über das LMN mit der LMN-Schnittstelle 28 des SMGw, und somit mit dem GWA 900 verbunden werden. Das in Fig. 5 dargestellte Verfahren kann ebenso auf den EMT 800 anstelle des GWA 900 angewendet werden.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Datenverarbeitungsgerät (100), umfassend:
ein Niedrigenergie-, LoRa-, Kommunikationsmodul (2), das dazu eingerichtet ist, Messdaten mindestens einer Sensoreinheit (300) zu empfangen;
ein erstes Kommunikationsmodul (4), das dazu eingerichtet ist, Messdaten an ein Kommunikationsnetzwerk zu senden;
einen LoRa-Netzwerkserver (8), der dazu eingerichtet ist, aus den empfangenen Messdaten ausgewählte Messdaten durch Auswahl von Messdaten mindestens einer identifizierten Sensoreinheit zu bestimmen; und
einen LoRa-Anwendungsserver (10), der dazu eingerichtet ist, die ausgewählten Messdaten zu empfangen, mindestens einen für eine Messgröße repräsentativen Messwert aus den ausgewählten Messdaten zu ermitteln und ausschließlich den mindestens einen Messwert ohne weitere Messwerte über das erste Kommunikationsmodul (4) an das Kommunikationsnetzwerk zu senden.

2. Datenverarbeitungsgerät (100) nach einem der vorhergehenden Ansprüche, dazu eingerichtet, eine Kommunikationsverbindung bereitzustellen, welche die mindestens eine Sensoreinheit (300) mit mindestens einem Cloud-Dienst (1000) verbindet.

3. Datenverarbeitungsgerät (100) nach einem der vorhergehenden Ansprüche, ferner umfassend ein zweites Kommunikationsmodul (14), das dazu eingerichtet ist, von einer Weitverkehrsnetz-, WAN-, Schnittstelle (26) eines Smart Meter Gateways (500), SMGw, Daten zu empfangen, wobei das Datenverarbeitungsgerät (100) dazu eingerichtet ist, die von dem zweiten Kommunikationsmodul (14) empfangenen Daten des SMGw (500) an ein Kommunikationsnetzwerk zu senden.

4. Datenverarbeitungsgerät (100) nach Anspruch 3, dazu eingerichtet, eine gesicherte Kommunikationsverbindung zwischen dem SMGw (500) und mindestens einem externen Marktteilnehmer, EMT (800), und/oder mindestens einem Gateway-Administrator, GWA (900), bereitzustellen.

5. Datenverarbeitungsgerät (100) nach Anspruch 3 oder 4, wobei die über das zweite Kommunikationsmodul (14) empfangenen Daten einen Ressourcenverbrauch und/oder eine Ressourceneinspeisung eines ersten Zeitfensters anzeigen, wobei die Messdaten einen Ressourcenverbrauch und/oder eine Ressourceneinspeisung eines zweiten Zeitfensters anzeigen, und wobei das zweite Zeitfenster kürzer ist als das erste Zeitfenster.

6. Datenverarbeitungsgerät (100) nach einem der Ansprüche 3 bis 5, wobei die über das zweite Kommunikationsmodul (14) empfangenen Daten einen Ressourcenverbrauch und/oder eine Ressourceneinspeisung in einer ersten zeitlichen Auflösung anzeigen, wobei die Messdaten einen Ressourcenverbrauch und/oder eine Ressourceneinspeisung in einer zweiten zeitlichen Auflösung anzeigen, und wobei die zweite Auflösung eine höhere Auflösung ist als die erste Auflösung.

7. Datenverarbeitungsgerät (100) nach einem der vorhergehenden Ansprüche, ferner umfassend ein drittes Kommunikationsmodul (16), das dazu eingerichtet ist, Messdaten eines Basiszählers (600) und/oder einer modernen Messeinrichtung, mME (700), zu empfangen.

8. Datenverarbeitungsgerät (100) nach Anspruch 7, ferner umfassend ein viertes Kommunikationsmodul (18), das dazu eingerichtet ist, die Messdaten des Basiszählers (600) und/oder der mME (700) an ein Smart Meter Gateway, SMGw (500), zu senden.

9. Datenverarbeitungssystem (200), umfassend:
das Datenverarbeitungsgerät (100) nach einem der vorhergehenden Ansprüche; und
die mindestens eine Sensoreinheit (300).

10. Datenverarbeitungssystem (200), umfassend:
das Datenverarbeitungsgerät (100) nach einem der Ansprüche 3 bis 6 oder 8; und
das SMGw (500).

## Claims

1. Data processing apparatus (100) comprising:
a low-energy, LoRa, communication module (2) arranged to receive measurement data from at least one sensor unit (300);
a first communication module (4) arranged to send measurement data to a communication network;
a LoRa network server (8) arranged to determine selected measurement data from the received measurement data by selecting measurement data from at least one identified sensor unit; and
a LoRa application server (10) arranged to receive the selected measurement data, to determine at least one measurement value representative of a measured variable from the selected measurement data and to transmit only the at least one measurement value without further measurement values to the communication network via the first communication module (4).

2. Data processing apparatus (100) according to any one of the preceding claims arranged to provide a communication link connecting the at least one sensor unit (300) to at least one cloud service (1000).

3. Data processing apparatus (100) according to any one of the preceding claims, further comprising a second communication module (14) arranged to receive data from a wide area network, WAN, interface (26) of a smart meter gateway (500), SMGw, wherein the data processing apparatus (100) is arranged to transmit the data of the SMGw (500) received by the second communication module (14) to a communication network.

4. Data processing device (100) according to claim 3 arranged to provide a secure communication link between the SMGw (500) and at least one external market participant, EMT (800), and/or at least one gateway administrator, GWA (900).

5. Data processing apparatus (100) according to claim 3 or 4, wherein the data received via the second communication module (14) indicates a resource consumption and/or a resource injection of a first time window, wherein the measurement data indicates a resource consumption and/or a resource injection of a second time window, and wherein the second time window is shorter than the first time window.

6. Data processing apparatus (100) according to any one of claims 3 to 5, wherein the data received via the second communication module (14) indicates a resource consumption and/or a resource injection at a first temporal resolution, wherein the measurement data indicates a resource consumption and/or a resource injection at a second temporal resolution, and wherein the second resolution is a higher resolution than the first resolution.

7. Data processing apparatus (100) according to any one of the preceding claims, further comprising a third communication module (16) adapted to receive measurement data from a base meter (600) and/or an advanced measuring device, mME (700).

8. Data processing device (100) according to claim 7, further comprising a fourth communication module (18) arranged to send the measurement data of the base meter (600) and/or the mME (700) to a smart meter gateway, SMGw (500).

9. Data processing system (200) comprising:
the data processing apparatus (100) according to any one of the preceding claims; and
the at least one sensor unit (300).

10. Data processing system (200) comprising:
the data processing apparatus (100) according to any one of claims 3 to 6 or 8; and
the SMGw (500).

## Revendications

1. Appareil de traitement de données (100), comprenant:
un module de communication de faible puissance, LoRa, (2) qui est conçu pour recevoir des données de mesure d'au moins une unité de détection (300);
un premier module de communication (4) qui est conçu pour envoyer les données de mesure à un réseau de communication;
un serveur de réseau LoRa (8) qui est conçu pour déterminer à partir des données de mesure reçues, des données sélectionnées par sélection de données de mesure d'au moins une unité de détection identifiée; et
un serveur d'application LoRa (10) qui est conçu pour recevoir les données de mesure sélectionnées, pour déterminer au moins une valeur de mesure représentant une grandeur de mesure à partir des données de mesure sélectionnées et envoyer uniquement l'au moins une valeur de mesure sans les autres valeurs de mesure par l'intermédiaire du premier module de communication (4) au réseau de communication.

2. Appareil de traitement de données (100) selon l'une quelconque des revendications précédentes, conçu pour fournir une liaison de communication qui relie l'au moins une unité de détection (300) à l'au moins un service infonuagique (1000).

3. Appareil de traitement de données (100) selon l'une quelconque des revendications précédentes, comprenant en outre un second module de communication (14) qui est conçu pour recevoir des données provenant d'une interface (26) de réseau à longue distance, WAN, d'une passerelle de compteur intelligent, SMGw, (500), dans lequel l'appareil de traitement de données (100) est conçu pour envoyer les données de la SMGw (500) reçues par le second module de communication (14) à un réseau de communication.

4. Appareil de traitement de données (100) selon la revendication 3, conçu pour fournir une liaison de communication sécurisée entre la SMGw (500) et au moins un acteur du marché externe, EMT, (800) et/ou au moins un administrateur de passerelle, GWA, (900).

5. Appareil de traitement de données (100) selon la revendication 3 ou 4, dans lequel les données reçues par l'intermédiaire du second module de communication (14) affichent une consommation de ressources et/ou une injection de ressources d'une première fenêtre temporelle, dans lequel les données de mesure affichent une consommation de ressources et/ou une injection de ressources d'une seconde fenêtre temporelle, et dans lequel la seconde fenêtre temporelle est plus courte que la première fenêtre temporelle.

6. Appareil de traitement de données (100) selon l'une quelconque des revendications 3 à 5, dans lequel les données reçues par l'intermédiaire du second module de communication (14) affichent une consommation de ressources et/ou une injection de ressources dans une première résolution temporelle, dans lequel les données de mesure affichent une consommation de ressources et/ou une injection de ressources dans une seconde résolution temporelle, et dans lequel la seconde résolution est une résolution supérieure à la première résolution.

7. Appareil de traitement de données (100) selon l'une quelconque des revendications précédentes, comprenant en outre un troisième module de communication (16) qui est conçu pour recevoir des données de mesure d'un compteur de base (600) et/ou d'un dispositif de mesure moderne, mME (700).

8. Appareil de traitement de données (100) selon la revendication 7, comprenant en outre un quatrième module de communication (18) qui est conçu pour envoyer les données de mesure du compteur de base (600) et/ou du mME (700) à une passerelle de compteur intelligent, SMGw (500).

9. Système de traitement de données (100), comprenant:
l'appareil de traitement de données (100) selon l'une quelconque des revendications précédentes ; et
l'au moins une unité de détection (300).

10. Système de traitement de données (100), comprenant:
l'appareil de traitement de données (100) selon l'une quelconque des revendications 3 à 6 ou 8; et
la SMGw (500).
